# EUROPÄISCHE PATENTSCHRIFT

(11) **EP 0 394 618 B1**
(45) Veröffentlichungstag und Bekanntmachung des Hinweises auf die Patenterteilung: **24.08.1994**
(21) Anmeldenummer: 90101875.4
(22) Anmeldetag: 31.01.1990
(51) Int. Cl.: G02B 6/44

(54) **Optisches Kabel**
Optical cable
Câble optique

(30) Priorität: 24.04.1989 DE 3913372
(43) Veröffentlichungstag der Anmeldung: 31.10.1990
(73) Patentinhaber: KABEL RHEYDT Aktiengesellschaft, D-41179 Mönchengladbach (DE)
(72) Erfinder: Zamzow, Peter, D-4360 Bochum 1 (DE); Hög, Georg, D-4050 Mönchengladbach 2 (DE); Delâge, Peter, D-4053 Jüchen 5 (DE); Korporal, Hans-Werner, D-4100 Duisburg (DE)
(74) Vertreter: Mende, Eberhard, Dipl.-Ing.

(56) Entgegenhaltungen:
- EP-A- 242 775
- EP-A- 0 020 036
- EP-A- 0 076 637
- EP-A- 0 160 778
- EP-A- 0 261 000
- DE-A- 3 637 603
- PATENT ABSTRACTS OF JAPAN vol. 7, no. 134 (P-203)(1279) 11 Juni 1983 ; & JP-A-58 49 906

## Beschreibung

Die Erfindung betrifft ein optisches Kabel nach dem Oberbegriff des Anspruches 1. Optische Kabel enthalten die optischen Adern in Form von Bündeln oder anderen Verbänden, welche das Wiederauffinden einer bestimmten optischen Ader erleichtern. Eine Möglichkeit, die optischen Adern zu ordnen, besteht darin, einen langgestreckten Profilkörper mit wendelförmigen Nuten zur Aufnahme der optischen Adern zu verwenden. Die optischen Adern können zu flachen Bändern zusammengefügt werden, wobei sie innerhalb eines solchen Stapels geometrisch festgelegt und damit leicht identifizierbar sind.

Aus dem Europäischen Patent 76 637 ist es bekannt, optische Adern in Kanäle eines Profilkörpers lose einzulegen. Die optischen Adern haben auf diese Weise eine hohe Beweglichkeit in den Nuten; jedoch ist auf diese Weise die Anzahl der Adern, die in einem Kabel untergebracht werden können, begrenzt. Außerdem ist die Möglichkeit, eine bestimmte Ader wiederaufzufinden, nur aufgrund besonderer, auf der Ader angebrachter Kennzeichen möglich.

Aus diesem Grunde ist man bereits dazu übergegangen, in Nuten eines Profilstranges Lichtwellenleiter-Bändchen anzuordnen, durch ein unmittelbares Übereinanderschichten solcher Bändchen entsteht ein Stapel, der eine Vielzahl Lichtwellenleiter/optischer Adern enthält (EP-A-0 242 775). Wird das Kabel gebogen, erlaubt diese Anordnung jedoch keine Relativbewegung der Lichtwellenleiter in Bezug auf die Nutenwandung, sie können damit auftretenden mechanischen Kräften nicht ausweichen, Längenänderungen im Lichtwellenleiter beeinflussen deren Übertragungseigenschaften nachteilig.

Ausgehend von diesem Stand der Technik liegt der Erfindung die Aufgabe zugrunde, bei einem optischen Kabel mit Profilkörper mit wendelförmigen Nuten die Anordnung so zu treffen, daß der Profilkörper zur Aufnahme möglichst vieler optischer Adern befähigt ist, daß diese Adern beim Spleißen leicht identifiziert werden können und daß die Adern keine Längenänderung erfahren.

Diese Aufgabe wird bei einem optischen Kabel der eingangs erwähnten Art nach der Erfindung durch die im Kennzeichen des Anspuchs 1 erwähnten Merkmale gelöst.

Zwar ist es bereits bekannt (DE-A-36 37 603), bei einem optischen Kabel mit einem Profilkörper mit schraubenlinienförmig verlaufender Hohlkehle in dieser Hohlkehle mindestens ein komprimierbares Element vorzusehen, hierbei handelt es sich aber nicht um gestapelte optische Adern enthaltende Bänder, wo es darum geht, möglichst viele optische Adern längenänderungsfrei in der Hohlkehle zu lagern.

Ausführungsbeispiele der Erfindung werden nachstehend anhand der Zeichnung näher erläutert.

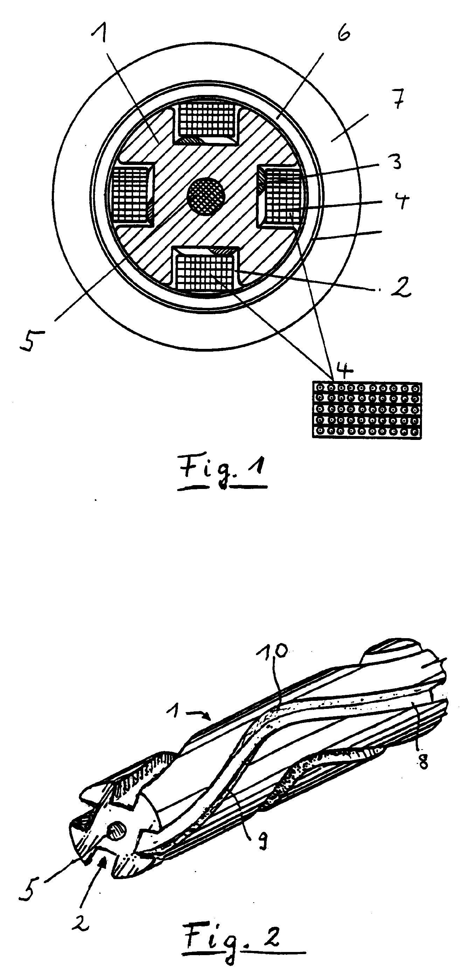

Dabei zeigt Figur 1 einen Querschnitt durch ein Kabel gemäß der Erfindung und Figur 2 eine perspektivische Ansicht eines Profilkörpers.

Ein LWL-Kabel nach der Erfindung besteht im wesentlichen aus dem Profilkörper mit einer Anzahl am Umfang des Profilkörpers 1 verteilten rechteckigen Nuten 2, einer Bebänderung bzw. einer Zugentlastung 6 aus Glas- oder Aramidfaser, welche den Profilkörper umgeben, sowie einem Polyäthylen-Mantel 7.

Die in Abbildung 1 dargestellten vier Nuten 2 weisen am Boden 8 der Nut (s. Figur 2) ein Kautschukband 3 auf. Dieses Kautschukband ist vorzugsweise raupenförmig ausgebildet und berührt abwechselnd die linke 9 und rechte Seitenwand 10 der Nut. Bei diesem mäanderförmig ausgebildeten Band entstehen nach der Bedeckung mit den aufeinandergestapelten LWL-Bändern 4 lediglich im Bereich der Seitenwände 9, 10 der Nut 2 Längskanäle, in denen sich eingedrungenes Wasser ausbreiten kann. Deshalb wird in die Nuten entweder Quellpulver oder eine Füllung mit einer gelartigen Masse eingebracht. Als Füllmasse haben sich insbesondere die Petrolate bewährt. Das polsternde Band 3 besteht vorzugsweise aus einer Kautschukmasse.

Der Profilkörper 1 (s. Figur 2) weist an seinem Umfang mehrere im Querschnitt rechteckige Nuten 2 auf. Die Nuten verlaufen längs des Profilkörpers wendelförmig und haben untereinander den gleichen Schraubensinn. Der Schraubensinn kann längs des Profilkörpers auch wechseln, analog zur SZ-Verseilung. In der Mitte des Profilkörpers befindet sich eine Zugentlastung. Dieses Zentralelement 5 besteht vorzugsweise aus glasfaserverstärktem Kunststoff. Auf die Bodenfläche der Nuten wird ein elastisches Band 3 aufgespritzt, welches die anschließend in der Nut gestapelten Lagen von Flachbandleitungen elastisch federnd in der Nut führt. Dadurch wird einerseits eine gewisse Abdichtung gegen Längswasser geschaffen, andererseits aber auch erreicht, daß die Lichtwellenleiter bei Biegung des Kabels ausweichen können und keine Längenänderung erfahren.

## Patentansprüche

1. Optisches Kabel mit einem langgestreckten Profilkörper (1), welcher wendelförmige Nuten (2) mit annähernd rechteckigem Profil aufweist, die um die Längsachse des Profilkörpers (1) angeordnet sind, und in denen sich zu flachen Bändern (4) zusammengefügte optische Adern befinden, wobei die Bänder (4) in jeder Nut (2) übereinander gestapelt sind, dadurch gekennzeichnet, daß die gestapelten Bänder (4) durch eine auf der Bodenfläche (8) der Nuten (2) befindliche Kautschukmasse (3) elastisch federnd geführt sind, die gleichzeitig den Bereich zwischen Bodenfläche (8), Nut und gestapelten Bändern (4) in Längsrichtung abdichtet.

2. Optisches Kabel nach Anspruch 1, dadurch gekennzeichnet, daß die Kautschukmasse (3) die Bodenfläche (8) der Nut (2) mit nahezu gleichmäßiger Stärke bedeckt.

3. Optisches Kabel nach Anspruch 1 oder 2, dadurch gekennzeichnet, daß die Kautschukmasse (3) in Form einer sinusähnlichen mäandernden Schnur in Längsrichtung der Bodenfläche (8) jeder Nut (2) abwechselnd die beiden Seitenwände der Nut (2) berührt.

4. Optisches Kabel nach einem der Ansprüche 1 - 3, dadurch gekennzeichnet, daß der Profilkörper einen glasfaserverstärkten Kern (5) zur Erhöhung der Zugfestigkeit aufweist.

5. Optisches Kabel nach einem der Ansprüche 1 - 4, dadurch gekennzeichnet, daß zur Abdichtung der Nuten gegen Längswasser Quellpulver vorgesehen ist.

6. Optisches Kabel nach einem der Ansprüche 1 - 4, dadurch gekennzeichnet, daß zur Abdichtung gegen Längswasser Petrolate vorgesehen sind.

## Claims

1. Optical cable having an elongate profile body (1), which exhibits helical grooves (2) with approximately rectangular profile, which grooves are disposed about the longitudinal axis of the profile body (1), and in which optical conductors joined together to form flat bands (4) are situated, in which the bands (4) in each groove (2) are stacked one above the other, characterized in that the stacked bands (4) are elastically resiliently guided through a rubber mass (3) situated on the floor surface (8) of the grooves (2), which mass at the same time seals off the region between floor surface (8), groove and stacked bands (4) in the longitudinal direction.

2. Optical cable according to Claim 1, characterized in that the rubber mass (3) covers the floor surface (8) of the groove (2) with almost uniform thickness.

3. Optical cable according to Claim 1 or 2, characterized in that the rubber mass (3), in the form of a sine-like meandering string, alternately touches the two side walls of the groove (2) in the longitudinal direction of the floor surface (8) of each groove (2).

4. Optical cable according to one of Claims 1 - 3, characterized in that the profile body exhibits a glass-fibre-reinforced core (5) to increase the tensile strength.

5. Optical cable according to one of Claims 1 - 4, characterized in that swelling powder is provided to seal off the grooves against longitudinal water.

6. Optical cable according to one of Claims 1 - 4, characterized in that petrolates are provided for sealing off against longitudinal water.

## Revendications

1. Câble optique comportant un corps profilé (1) qui s'étend longitudinalement et présente des rainures de forme hélicoïdale et de profil approximativement rectangulaire qui sont disposées autour de l'axe longitudinal du corps profilé (1) et dans lesquelles se trouvent des conducteurs optiques regroupés en rubans plats (4), les rubans (4) étant empilés les uns au-dessus des autres dans chaque rainure (2), caractérisé par le fait que les rubans empilés (4) sont guidés élastiquement par une masse de caoutchouc (3) qui se trouve sur la surface du fond (8) des rainures (2) et qui assure simultanément, selon la direction longitudinale, l'étanchéité de la zone située entre la surface du fond (8), la rainure et les rubans empilés (4).

2. Câble optique selon la revendication 1, caractérisé par le fait que la masse de caouthcouc (3) recouvre la surface du fond (8) de la rainure (2) avec une épaisseur presque régulière.

3. Câble optique selon la revendication 1 ou 2, caractérisé par le fait que la masse de caoutchouc (3), sous forme d'un ruban en méandre sinusoïdal selon la direction longitudinale de la surface du fond (8) de chaque rainure (2), touche alternativement les deux parois latérales de la rainure (2).

4. Câble optique selon l'une des revendications 1 - 3, caractérisé par le fait que le corps profilé présente un noyau (5) armé de fibres de verre pour accroître la résistance à la traction.

5. Câble optique selon l'une des revendications 1 - 4, caractérisé par le fait que pour l'étanchéité des rainures à l'égard de l'eau s'écoulant longitudinalement est prévue une poudre gonflante.

6. Câble optique selon l'une des revendications 1 - 4, caractérisé par le fait que pour assurer l'étanchéité à l'égard de l'eau s'écoulant longitudinalement sont prévus des produits paraffineux.
